# EUROPEAN PATENT APPLICATION

(11) **EP 2 276 192 A2**
(43) Date of publication of application: **19.01.2011**
(21) Application number: 09738991.0
(22) Date of filing: 29.04.2009
(51) Int. Cl.: H04L 5/22, H04L 29/00, H04B 7/204

(54) **METHOD AND APPARATUS FOR TRANSMITTING/RECEIVING MULTI - CHANNEL AUDIO SIGNALS USING SUPER FRAME**

(30) Priority: 30.04.2008 KR 20080040293
(71) Applicant: Electronics and Telecommunications Research Institute, Daejeon-city 305-350 (KR)
(72) Inventor: LEE, Yongju, Daejon 305-728 (KR); SEO, Jeong-Il, Daejon 305-728 (KR); BEACK, Seungkwon, Daejon 305-761 (KR); JANG, Daeyoung, Daejon 305-768 (KR); KANG, Kyeongok, Daejon 305-727 (KR); HONG, Jin-Woo, Daejon 305-340 (KR); LIM, Jong-Soo, Daejon 301-110 (KR); KIM, Jinwoong, Daejon 305-761 (KR)
(74) Representative: Betten & Resch
(86) International application number: PCT/KR2009/002274
(87) International publication number: WO 2009/134085

(57) **Abstract**

A method and apparatus for transmitting/receiving multi-channel audio signals is provided. The apparatus for transmitting multi-channel audio signals includes: a multi-channel audio down-mixer configured to receive a multi-channel audio signal and transform the multi-channel audio signal into a down-mixed audio signal and a supplementary signal; a super frame generator configured to generate a super frame including a plurality of supplementary signal frames; and a packetizer configured to packetize the super frame, wherein the super frame includes supplementary signal frame number information and supplementary signal frame length information of the supplementary signal frames included in the super frame.

## Description

### TECHNICAL FIELD

The present invention relates to a method and apparatus for transmitting/receiving multi-channel audio signals; and, more particularly, to a method and apparatus for transmitting/receiving multi-channel audio signals using a super frame.

### BACKGROUND ART

Recently, researchers are studying to develop a method for coding multi-channel audio signals. Moving Picture Experts Group (MPEG) Surround technology also provides a standard for coding/decoding methods of multi-channel audio signals. According to the MPEG Surround technology, multi-channel audio signals are divided into down-mixed stereo audio signals and supplementary signals to be coded. The down-mixed audio signals are coded using a coding method appropriate for an application, such as Advanced Audio Coding (AAC) or Bit Sliced Arithmetic Coding (BSAC).

Meanwhile, Digital Multimedia Broadcasting (DMB) is a multimedia service available in a mobile environment and the DMB service is provided through a terminal such as a mobile phone, a Personal Digital Assistant, a receiver mounted on a vehicle. The DMB technology supports only stereo audio service, but there are recent efforts for extending the support range up to a multi-channel audio service as well. For the stereo-based DMB system to provide the multi-channel audio service in a stereo-based DMB system, the DMB system should be able to efficiently transmit data while maintaining backward compatibility with the DMB service.

The multi-channel audio service has a higher data rate than a stereo audio service. The DMB technology has a shortcoming of a low transmission rate, compared to other technology such as Digital Television (DTV). Particularly, the DMB adopts an MPEG-2 Transport Stream (TS) and the MPEG-2 system specification requires elementary streams (ESs) to have a different PID. For this reason, although the output rate of the elementary streams is low, the output rate of transport streams may become high. Supplementary signals generated during the coding of the multi-channel audio signals does not have high ES data rate. However, when the supplementary signals are packetized into transport streams and transmitted for each frame, the output rate of the transport streams may be more than twice as high as the output rate of the elementary streams. Therefore, to transmit multi-channel audio signals in a DMB system, it is required to develop a method for efficiently packetizing and transmitting multi-channel audio signals in such a manner that the data rate does not increase excessively while maintaining reverse compatibility with the conventional DMB system.

The DMB service is defined to transmit one video object and one audio object for a main video service and a main speech service, respectively. Herein, the audio object may be mono or stereo. Recent advancement in multimedia technology allows digital televisions and Digital Versatile Discs (DVDs) to provide multi-channel audio services, and the users' demands for the multi-channel audio services increase as well. To keep pace with such trends, researchers are studying to develop a technology that can provide a multi-channel audio service through a DMB system. In the DMB system, mono or stereo audio signals are coded based on the BSAC or the AAC to be transmitted. Since multi-channel audio transmission requires transmission of additional data, the existing transmission method needs to be modified.

Meanwhile, the multi-channel coding methods such as MPEG-Surround and Sound Source Location Cue Coding (SSLCC) reach standards for transmitting and recovering multi-channel audio signals by separating them into down-mixed stereo signals and supplementary signals. The standard multi-channel coding technologies are favorable to a reverse compatible service of multi-channel audio signals. In short, when multi-channel audio signals are separated into down-mixed stereo signals and supplementary signals through a coding process, the down-mixed stereo signals is used compatibly with a conventional stereo audio-based service. The multi-channel audio coding method was suggested to provide a multi-channel audio service through a DMB system. However, this method, too, separates the multi-channel audio signals into down-mixed stereo signals and supplementary signals. Herein, the down-mixed stereo signals are coded based on BSAC or AAC for compatibility with the conventional DMB system and the supplementary signals are assumed as additional elementary streams and packetization is performed on the basis of each supplementary signal frame and then transmitted.

However, when the supplementary signals are packetized on a frame basis and transmitted, the data transmission rate becomes relatively high in the DMB system. The increase in the data transmission rate originated from the supplementary signals occurs because the supplementary signals go through a transport stream packetization process for every frame. Therefore, at least one transport stream packet should be transmitted to transmit the supplementary signals of one frame.

### DISCLOSURE

### TECHNICAL PROBLEM

An embodiment of the present invention is directed to providing a method and apparatus for efficiently transmitting/receiving multi-channel audio signals by decreasing a data transmission rate in a broadcasting environment such as Digital Multimedia Broadcasting (DMB).

Another embodiment of the present invention is directed to providing a compatible multi-channel audio transmission/reception method and apparatus that can process mono or stereo audio signals both in a terminal capable of recovering multi-channel audio signals and in a terminal incapable of recovering multi-channel audio signals.

Another embodiment of the present invention is directed to providing a multi-channel audio transmission/reception method and apparatus that can transmit/receive supplementary signal frames and perform synchronization with down-mixed audio signals precisely by using information on the number of supplementary signal frames, which will be referred to as supplementary signal frame number information, and information on the length of each supplementary signal frame included in a super frame, which will be referred to as supplementary signal frame length information.

Other objects and advantages of the present invention can be understood by the following description, and become apparent with reference to the embodiments of the present invention. Also, it is obvious to those skilled in the art of the present invention that the objects and advantages of the present invention can be realized by the means as claimed and combinations thereof.

### TECHNICAL SOLUTION

In accordance with an aspect of the present invention, there is provided an apparatus for transmitting multi-channel audio signals, which includes: a multi-channel audio down-mixer configured to receive a multi-channel audio signal and transform the multi-channel audio signal into a down-mixed audio signal and a supplementary signal; a super frame generator configured to generate a super frame including a plurality of supplementary signal frames; and a packetizer configured to packetize the super frame, wherein the super frame includes supplementary signal frame number information and supplementary signal frame length information of the supplementary signal frames included in the super frame.

In accordance with another aspect of the present invention, there is provided an apparatus for receiving multi-channel audio signals, which includes: a receiver configured to receive packets including a super frame; a depacketizer configured to depacketize the received packets to thereby acquire the super frame included in the packets; and a super frame analyzer configured to acquire a plurality of supplementary signal frames included in the super frame based on supplementary signal frame number information and supplementary signal frame length information of the supplementary signal frames included in the super frame.

In accordance with another aspect of the present invention, there is provided a method for transmitting multi-channel audio signals, which includes: receiving a multi-channel audio signal and transforming the multi-channel audio signal into a down-mixed audio signal and a supplementary signal; generating a super frame including a plurality of supplementary signal frames; and packetizing the super frame, wherein the super frame includes supplementary signal frame number information and supplementary signal frame length information of the supplementary signal frames included in the super frame.

In accordance with another aspect of the present invention, there is provided a method for receiving multi-channel audio signals, which includes: a receiving packets including a super frame; depacketizing the received packets to thereby acquire the super frame included in the packets; and acquiring a plurality of supplementary signal frames included in the super frame based on supplementary signal frame number information and supplementary signal frame length information of the supplementary signal frames included in the super frame.

### ADVANTAGEOUS EFFECTS

The technology of the present invention described above can efficiently transmit/receive multi-channel audio signals by decreasing a data transmission rate in a broadcasting environment such as Digital Multimedia Broadcasting (DMB).

Also, the technology of the present invention can process mono or stereo audio signals both in a terminal capable of recovering multi-channel audio signals and in a terminal incapable of recovering multi-channel audio signals.

Also, the technology of the present invention can transmit/receive supplementary signal frames and perform synchronization with down-mixed audio signals precisely by using information on the number of supplementary signal frames and information on the length of each supplementary signal frame, which is included in the super frame.

### BRIEF DESCRIPTION OF THE DRAWINGS

Fig. 1 is a block view illustrating a multi-channel audio transmission apparatus in accordance width an embodiment of the present invention.
Fig. 2 is a block view illustrating a multi-channel audio transmission apparatus in accordance with another embodiment of the present invention.
Fig. 3 is a block view of a super frame generator shown in Figs. 1 and 2.
Fig. 4 illustrates a super frame packetized by a multi-channel audio transmission apparatus shown in Fig. 2.
Fig. 5 is a flowchart describing a method for transmitting multi-channel audio signals in accordance with an embodiment of the present invention.
Fig. 6 is a block view illustrating a multi-channel audio reception apparatus in accordance with an embodiment of the present invention.
Fig. 7 is a block view illustrating a multi-channel audio reception apparatus in accordance with another embodiment of the present invention.
Fig. 8 is a block view of a super frame analyzer shown in Figs. 6 and 7.
Fig. 9 is a flowchart describing a method for receiving multi-channel audio signals in accordance with an embodiment of the present invention.

### BEST MODE FOR THE INVENTION

The advantages, features and aspects of the invention will become apparent from the following description of the embodiments with reference to the accompanying drawings, which is set forth hereinafter. When it is considered that detailed description on a related art may obscure a point of the present invention, the description will not be provided herein. Hereafter, specific embodiments of the present invention will be described with reference to the accompanying drawings. The same reference numeral is used for the same constituent element although they appear in different drawings.

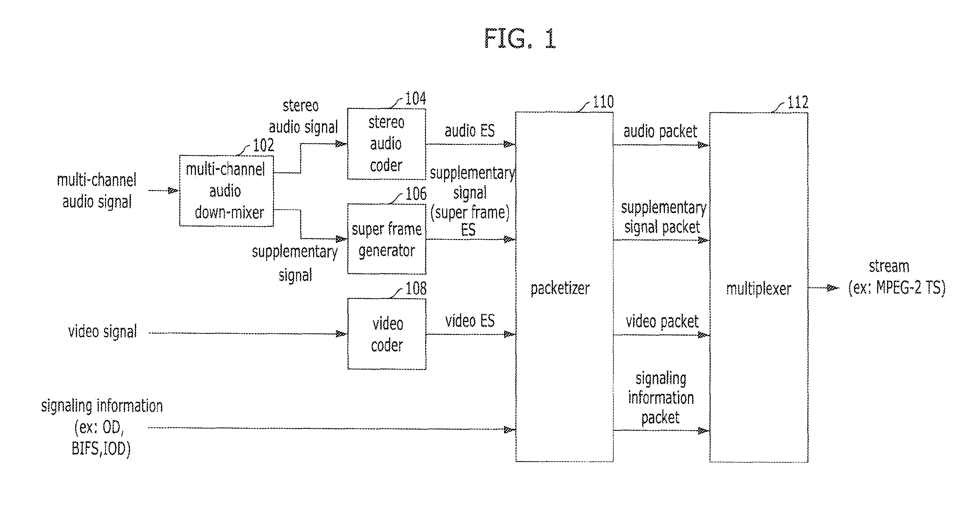

Fig. 1 is a block view illustrating a multi-channel audio transmission apparatus in accordance with an embodiment of the present invention.

Referring to Fig. 1, the multi-channel audio transmission apparatus of the embodiment on the present invention includes a multi-channel audio down-mixer 102, a stereo audio coder 104, a super frame generator 106, a video coder 108, a packetizer 110, and a multiplexer 112.

The multi-channel audio down-mixer 102 receives a multi-channel audio signal and transforms the multi-channel audio signal into a stereo audio signal and a supplementary signal. Subsequently, the multi-channel audio down-mixer 102 transmits the stereo audio signal to the stereo audio coder 104 and the supplementary signal to the super frame generator 106. In accordance with another embodiment of the present invention, the multi-channel audio down-mixer 102 may transform the received multi-channel audio signal into a mono audio signal and a supplementary signal.

The stereo audio coder 104 compresses and codes the stereo audio signal transmitted from the multi-channel audio down-mixer 102 to thereby generate an audio elementary stream (ES) and provides the audio ES to the packetizer 110.

The super frame generator 106 receives the supplementary signal from the multi-channel audio down-mixer 102 and generates a super frame (or supplementary signal ES in the form of a super frame) which includes a plurality of frames of the received supplementary signal. Herein, the supplementary signal is a signal including side information for multi-channel audio, such as spatial information of a multi-channel audio signal.

The super frame generator 106 determines how many supplementary signal frames is to be included in a super frame to be generated and generates a super frame based on the determination. The super frame generator 106 may include a plurality of supplementary signal frames as long as the total bytes of the supplementary signal frames does not go over the predetermined super frame length, e.g., 150 bytes. It is also possible to predetermine the number of the supplementary signal frames to be included in a super frame, regardless of the length of the super frame (for example, 3 supplementary signal frames) and generate the super frame to include the predetermined number of supplementary signal frames. The number of the supplementary signal frames to be included in a super frame may be different according to an environment where multi-channel audio signals are transmitted/received and recovered, the transmission specification, recovery specification, and other system configurations.

Meanwhile, the generated super frame may include such information as the number of supplementary signal frames included in the super frame and the length of each supplementary signal frame. The supplementary signal frame number information and the supplementary signal frame length information are used for a receiving part to receive the super frame and acquire accurate supplementary signals out of the super frame. The functions and operations of the super frame generator 106 will be described in detail later on.

The video coder 108 receives and codes video signals to thereby generate video ES, and transmits the video ES to the packetizer 110.

The packetizer 110 receives and packetizer audio/video signals, such as audio ES, supplementary signal ES in the form of a super frame and the video ES, and signaling information, such as Object Descriptor (OD), Binary Format for Scene (BIFS) and Initial Object Descriptor (IOD). Herein, OD informs elementary stream identification (ES_ID) and the BIFS arranges objects on a screen. The IOD sends ES_ID of OD or BIFS to the initial access positions of all streams.

Meanwhile, the packetizer 110 includes composition time stamp (CTS) in a packetized super frame. The composition time stamp is used for synchronization between stereo audio signals and supplementary signals when the receiving part recovers the stereo audio signals. The packetizer 110 may set up the composition time of a supplementary signal frame which is recovered temporally first among the multiple supplementary signal frames included in the super frame as the composition time stamp of the super frame. The composition time stamp will be described in detail later.

The audio packets, the supplementary signal packets, the video packets, the signaling information packets generated in the packetizer 110 are provided to the multiplexer 112. The multiplexer 112 multiplexes the received packets to thereby generate MPEG-2 transport steam. The stream of the MPEG-2 TS specification is transmitted to a player or a storage through a broadcasting service such as DMB.

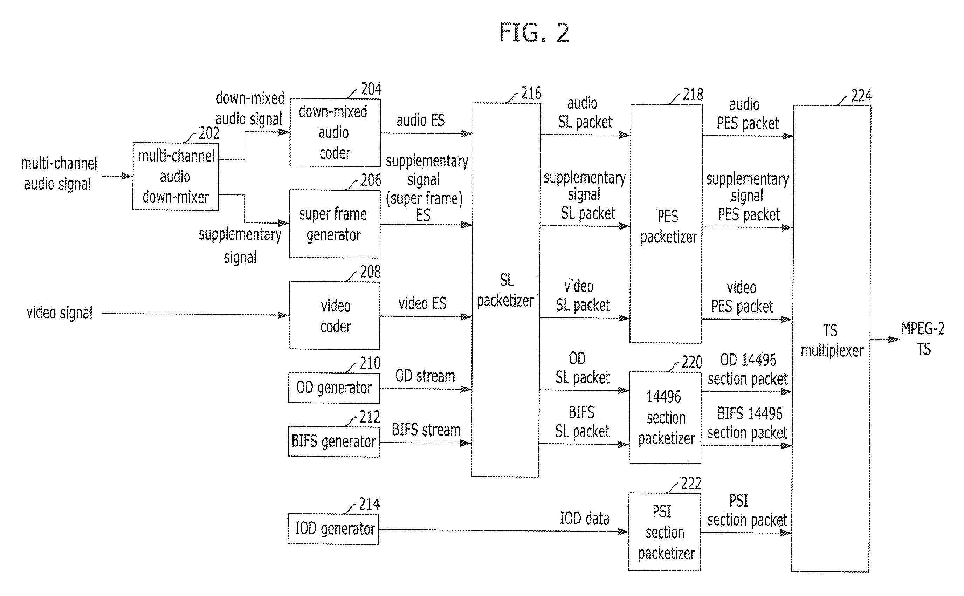

Fig. 2 is a block view illustrating a multi-channel audio transmission apparatus in accordance with another embodiment of the present invention.

Referring to Fig. 2, the multi-channel audio transmission apparatus of this embodiment includes a multi-channel audio down-mixer 202, a down-mixed audio coder 204, a super frame generator 206, a video coder 208, an OD generator 210, a BIFS generator 212, an IOD generator 214, a synchronization layer (SL) packetizer 216, a Packetized Elementary Stream (PES) packetizer 218, a 14496 section packetizer 220, a Program Specific Information (PSI) section packetizer 222, and a TS multiplexer 224. Although not illustrated in Fig. 2, the multi-channel audio transmission apparatus may further include a transmitter for transmitting generated streams.

The multi-channel audio down-mixer 202 codes an inputted multi-channel audio signal to thereby generate a down-mixed audio signal, which is obtained through down-mixing into mono or stereo, and a supplementary signal. Subsequently, the multi-channel audio down-mixer 202 transmits the down-mixed audio signal to the down-mixed audio coder 204 and the supplementary signal to the super frame generator 206.

The down-mixed audio coder 204 compresses and codes the down-mixed audio signal transmitted from the multi-channel audio down-mixer 202 to thereby generate audio ES, which is provided to the SL packetizer 216.

The super frame generator 206 receives the supplementary signal from the multi-channel audio down-mixer 202 and generates one super frame (or a supplementary signal ES in the form of a super frame) which includes a plurality of frames of the received supplementary signal. The generated super frame is transmitted to the SAL packetizer 216. The video coder 208 receives a video signal and codes the video signal to thereby generate video ES. The generated video ES is transmitted to the SL packetizer 216.

The OD generator 210 and the BIFS generator 212 generate an OD stream and a BIFS stream, respectively, and transmit the generated streams to the SL packetizer 216. The IOD generator 214 generates IOD data based on IOD text data inputted from the outside and transmit the IOD text data to the PSI section packetizer 222.

The SL packetizer 216 generates SL packets, which are synchronization packets between the inputted media streams, e.g., audio ES, supplementary signal ES, video ES, OD stream, and BIFS stream. Among the SL packets generated in the SL packetizer 216, audio SL packets, supplementary signal SL packets, and video SL packets are transmitted to the PES packetizer 218, while OD SL packets and BIFS SL packets are transmitted to the 14496 section packetizer 220.

Meanwhile, the SL packetizer 216 includes composition time stamp (CTS) of the super frame in the header of the supplementary signal SL packet during the conversion of the supplementary signal ES into supplementary signal SL. The composition time stamp is used to perform synchronization between mono/stereo audio signals to be recovered and the supplementary signals when a multi-channel audio reception apparatus receives and recovers the multi-channel audio signals.

When the composition time stamp of the super frame is set up, the SL packetizer 216 may set up the composition time of the supplementary signal frame that is recovered temporally first among the multiple supplementary signal frames included in the super frame as the composition time stamp of the super frame. For example, when a super frame includes three supplementary signal frames which have composition time of 1:10:45 (which means one hour 10 minutes 45 seconds), 1:10:46, and 1:10:47, respectively, the composition time stamp of the super frame is set up as 1:10:45. When the multi-channel audio reception apparatus receives the packets including the super frame, it sets up the composition time stamp of the super frame as the composition time of the supplementary signal frame which is recovered first temporally, which is 1:10:45, among the multiple supplementary signal frames included in the super frame as and then set up the composition times of the other two supplementary signal frames according to a predetermined time interval, e.g., 1 second, which come to 1:10:46, and 1:10:47.

The audio SL packets, the supplementary signal SL packets, and the video SL packets generated in the SL packetizer 216 are transmitted to the PES packetizer 218. The PES pscketizer 218 transforms the received audio SL packets, supplementary signal SL packets, and video SL packets into audio PES packets, supplementary signal PES packets, and video PES packets and transmits them to the TS multiplexer 224.

The OD ST packets and the BIFS SL packets generated in the SL packetizer 216 are transmitted to the 14496 section packetizer 220. The 14496 section packetizer 220 transforms the received OD SL packets and BIFS SL packets into OD 14496 section packets and BIFS 14496 section packets and transmits them to the TS multiplexer 224.

The PSI section packetizer 222 generates a PSI section including IOD data transmitted from the IOD generator 214 and transmits the PSI section packets to the TS multiplexer 224.

The TS multiplexer 224 multiplexes the received audio PES packets, supplementary signal PES packets, video PES packets, OD 14496 section packets, BIFS 14496 section packets, and PSI section packets into an MPEG-2 transport stream (TS). The generated MPEG-2 transport stream may be transmitted to the multi-channel audio reception apparatus through the transmitter.

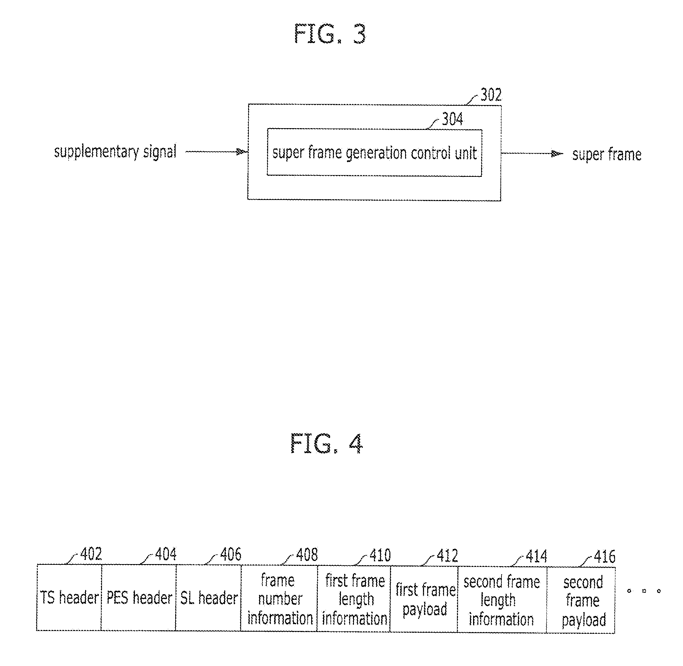

Fig. 3 is a block view of a super frame generator shown in Figs. 1 and 2. Referring to Fig. 3, a super frame generator 302 includes a super frame generation control unit 304. The super frame generation control unit 304 receives a supplementary signal from a multi-channel audio down-mixer to thereby generate one super frame (or super frame ES in the form of a super frame) which includes a plurality of frames of the received supplementary signal. The super frame generation control unit 304 determines how many supplementary signal frames to be included in the super frame to be generated and generate the super frame based on the determination. Since this process was described before by referring to Fig. 1, further description will not be provided herein.

Meanwhile, the generated super frame may include supplementary signal frame number information and supplementary signal frame length information of each supplementary signal frame included in the super frame. The supplementary signal frame number information and supplementary signal frame length information are used for a receiving part to receive the super frame and accurately obtain the supplementary signal out of the super frame. The following Table 1 shows a grammar of a multi-channel audio supplementary signal super frame in accordance with an embodiment of the present invention.

**Table 1**

| Number of bits | Field Name | Value |
|---|---|---|
| Super frame | | |
| 8 | Frame_number | |
| Side Information | | |
| 8 | For (i=0; i<n; i++) | |
| | { | |
| | Frame_length | |
| | Frame_payload | |
| | } | |
| | | |

In Table 1, Frame_number stands for the number of multi-channel audio supplementary signal frames included in one super frame. Also, Frame_length denotes the length of the supplementary signal frames of multi-channel audio expressed in bytes, and Frame_payload indicates a multi-channel audio supplementary signal. Other than the supplementary signal expressed by Frame_payload, the super frame shown in Table 1 includes Frame_number, which denotes the number of supplementary signal frames included in the super frame. The super frame also includes Frame length, which indicates the length or size of each supplementary signal frame included in the super frame.

The following Table 2 shows a grammar of a multi-channel audio supplementary signal super frame in accordance with another embodiment of the present invention.

**Table 2**

| Number of bits | Field Name | Value |
|---|---|---|
| Super frame | | |
| 8 | Frame_number | |
| Side Information | | |
| 8 | For (i=0; i<n; i++) | |
| | { | |
| | Frame_length | For Byte |
| | Frame_payload | Alignment |
| | Padding bint | |
| | } | |
| | | |

As shown in Table 2, the super frame according to this embodiment of the present invention includes padding bits in addition to Frame_number, Frame_length, and Frame_payload. The padding bits are used for byte alignment of a supplementary signal frame included in the super frame. A supplementary signal frame is generally inputted on a byte basis. However, when only some bits of one byte of the supplementary signal frame are inputted, the padding bits may be used to fill in the places for the other bits and thereby complete the one byte. As for the byte alignment, since it is widely known to those skilled in the art to which the present invention pertains, detailed description in it will not be provided herein.

Fig. 4 illustrates a super frame packetized by a multi-channel audio transmission apparatus shown in Fig. 2.

The super frame packet shown in Fig. 4 is obtained as a super frame generated in a super frame generator of the multi-channel audio transmission apparatus of Fig. 2 goes through SL packetization, PES packetization, and TS multiplexing. Referring to Fig. 4, a TS header 402 is generated from TS multiplexing; a PES header 404, from PES packetization; and an SL header 406, from SL packetization, respectively. Also, frame number-information 408, first frame length information 410, first frame payload 412, second frame length information 414, and second frame payload 416,... are all included in the super frame generated by the super frame generator. The frame number information 408 and the frame length informations 410 and 414 included in the super frame packet are used to analyze the super frame packet and obtain a plurality of supplementary signal frames in the multi-channel audio reception apparatus.

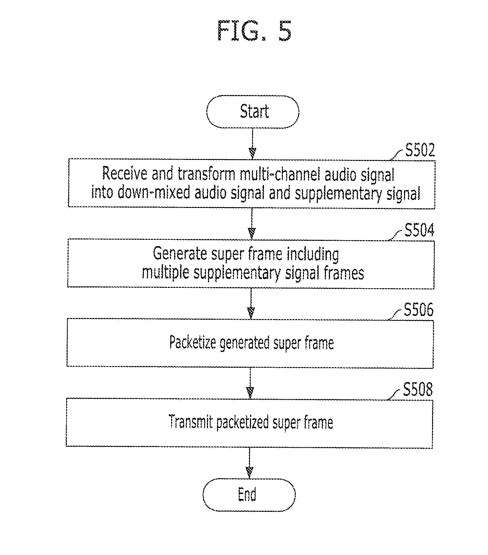

Fig. 5 is a flowchart describing a method for transmitting multi-channel audio signals in accordance with an embodiment of the present invention.

First, in step S502, received multi-channel audio signals are transformed into down-mixed audio signals and supplementary signals. In step S504, super frames each including a plurality of supplementary signal frames are generated. Each super frame includes supplementary signal frame number information and supplementary signal frame length information of each supplementary signal frame included in the super frame and it may further include padding bits.

In step S506, the generated super frames are packetized, and in step S508, the packetized super frames are transmitted. Herein, the packetized super frames may include composition time stamp for synchronization with the down-mixed audio signals. As for the composition time stamp, the composition time of a supplementary signal frame that is recovered temporally first among the multiple supplementary signal frames included in the super frame may be set up as the composition time stamp.

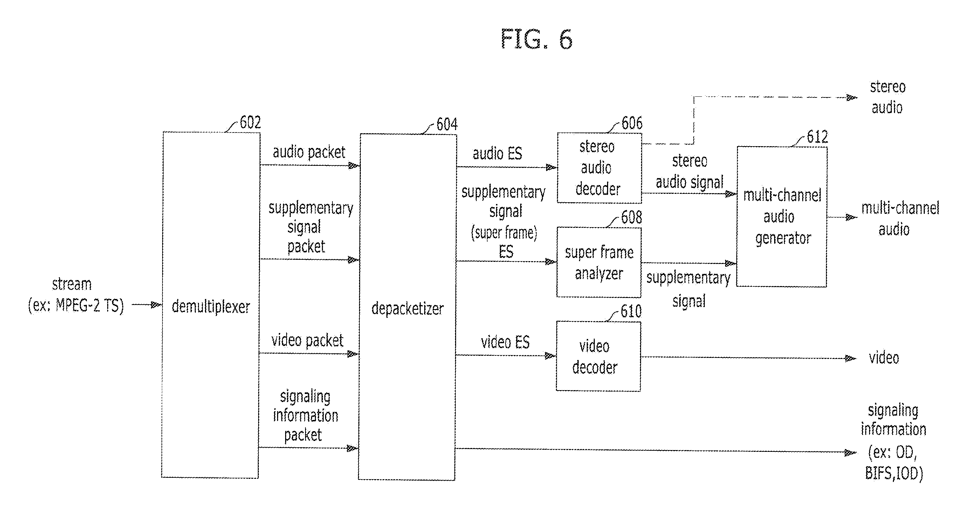

Fig. 6 is a block view illustrating a multi-channel audio reception apparatus in accordance with an embodiment of the present invention. Referring to Fig. 6, the multi-channel audio reception apparatus includes a demultiplexer 602, a depacketizer 604, a stereo audio decoder 606, a super frame analyzer 608, a video decoder 610, and a multi-channel audio generator 612. Although not illustrated in Fig. 6, the multi-channel audio reception, apparatus may further include a receiver for receiving streams such as PEG-2 transport stream.

The demultiplexer 602 demultiplexes streams received through the receiver into audio packets, supplementary signal packets, video packets, and signaling information packets, and transmits them to the depacketizer 604.

The depacketizer 604 depacketizes the audio packets, the supplementary signal packets, and the video packets which are transmitted from the demultiplexer 602 into audio ES, supplementary signal ES (super frame), and video ES. The depacketizer 604 depacketizes the signaling information packets to thereby generate signaling information such as OD, BIFS and IOD.

The stereo audio decoder 606 decodes the audio ES to generate stereo audio signals and transmits the stereo audio signals to the multi-channel audio generator 612. The stereo audio signal generated by the stereo audio decoder 606 is not used for generating multi-channel audio but it may be directly recovered as stereo audio itself. If a signal generated in the multi-channel audio down-mixer 102 of the multi-channel audio transmission apparatus is a mono audio signal, the mono audio signal may be generated from the audio ES.

The super frame analyzer 608 analyzes a super frame (or supplementary signal ES) and acquires a plurality of supplementary signal frames included in the super frame. Herein, the super frame analyzer 608 uses the supplementary signal frame number information and the supplementary signal frame length information of the supplementary signal frames included in the super frame. The super frame analyzer 608 first figures out how many supplementary signal frames it should obtain from the supplementary signal frame number information and precisely separates supplementary signal frames out of the super frame.

Meanwhile, the super frame analyzer 608 sets up the composition times of the obtained supplementary signal frames. A supplementary signal constitutes multi-channel audio along with a stereo audio signal corresponding thereto. To form the multi-channel audio, the supplementary signal and the stereo audio signal should be synchronized with each other. What is needed for the synchronization is the composition time stamp of a supplementary signal frame. The multi-channel audio generator 612 receives the stereo audio signal and generates the multi-channel audio by using the supplementary signal having the same composition time stamp as the stereo audio signal.

The super frame analyzer 608 first acquires the composition time stamp included in the super frame to set up the composition time stamp of the multiple supplementary signal frames. Then, the super frame analyzer 608 sets up the composition time stamp of the super frame as the composition time of a supplementary signal frame recovered temporally first among the multiple supplementary signal frames. When the composition time of the first supplementary signal frame is determined, the composition times of the other supplementary signal frames are determined based on a pre-calculated time interval.

For example, when a super frame includes three supplementary signal frames and the composition time of the first supplementary signal frame has a composition time of 1:10:45 (which means one hour 10 minutes 45 seconds), and the time interval between the supplementary signal frames is determined as '1 second,' the composition times of the second and third supplementary signal frames are determined as 1:10:46 and 1:10:47, respectively. The time interval may be determined through several methods. For example, when the frame rate of video/audio signals of a multi-channel audio transmission apparatus is 30 frames per second, the supplementary signal frames will have a frame rate of 30 frames peer second as well. Therefore, the time interval between supplementary signal frames may be come out to be 1/30 second.

The multi-channel audio generator 612 receives the stereo audio signal transmitted from the stereo audio decoder 504 and the frame-based supplementary signal transmitted from the super frame analyzer 608 and generates a multi-channel audio. The video decoder 610 receives the video ES transmitted from the depacketizer 604 and decodes the video YES to thereby generate video.

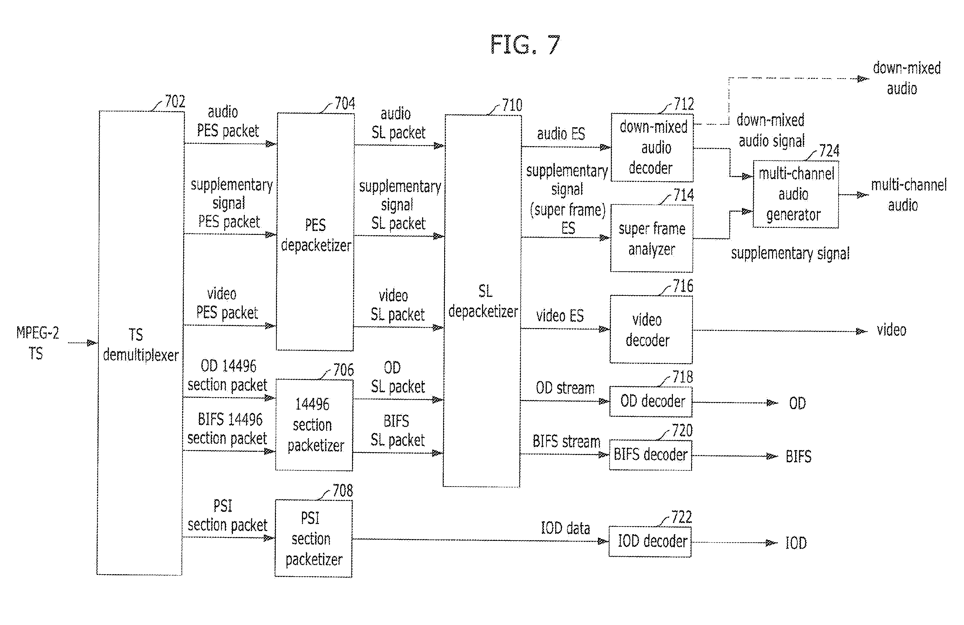

Fig. 7 is a block view illustrating a multi-channel audio reception apparatus in accordance with another embodiment of the present invention.

Referring to Fig. 7, the multi-channel audio reception apparatus in accordance with this embodiment of the present invention includes a TS demultiplexer 702, a PES depacketizer 704, a 14496 section depacketizer 706, a PSI section depacketizer 708, an SL depacketizer 710, a down-mixed audio decoder 712, a super frame analyzer 714, a video decoder 716, an OD decoder 718, a BIFS decoder 720, an IOD decoder 722, a multi-channel audio generator 724. Although not illustrated in Fig. 7, the multi-channel audio reception apparatus may further include a receiver for receiving streams such as MPEG-2 transport stream.

The TS demultiplexer 702 demultiplexes a PEG-2 transport stream received through the receiver into audio PES packets, supplementary signal PEPS packets, video PES packets, OD 14496 section packets, BIFS 14496 section packets, and PST section packets. The TS demultiplexer 702 provides the generated audio PES packets, supplementary signal PES packets, and video PES packets to the PES depacketizer 704. Then, the TS demultiplexer 702 transmits the OD 14496 section packets and the BIFS 14496 section packets to the 14496 section depacketizer 706 and the PSI section packets to the PSI section depacketizer 708.

The PES depacketizer 704 depacketizes the audio PES packets, the supplementary signal PES packets, and the video PES packets that are transmitted from the TS demultiplexer 702 into audio SL packets, supplementary signal SL packets, and video SL packets, respectively.

The 14496 section depacketizer 706 depacketizes the OD 14496 section packets and the BIFS 14496 section packets that are transmitted from the 14496 section depacketizer 706 into OD SL packets and BIFS SL packets.

The PSI section depacketizer 708 depacketizes the PSI section packets transmitted from the TS demultiplexer 702 and performs decoding to thereby generate IOD data. It transmits the generated IOD data to the IOD decoder 722.

The SAL depacketizer 710 depacketizes the audio SL packets, the supplementary signal SL packets, and the video SL packets that are transmitted from the PES depacketizer 704 into audio ES, supplementary signal ES (super frame), and video ES, respectively. Also, the SL depacketizer 710 depacketizes the OD SL packets and the BIFS SL packets that are transmitted from the 14496 section depacketizer 706 into OD stream and BIFS stream, respectively.

The down-mixed audio decoder 712 decodes the audio ES transmitted from the SL depacketizer 710 to thereby generate a down-mixed audio signal and transmits the generated down-mixed audio signal to the multi-channel audio generator 724. The down-mixed audio signal generated by the down-mixed audio decoder 712 may not be used for the generation of a multi-channel audio but it may be directly recovered as a down-mixed audio itself. The down-mixed audio signal generated by the down-mixed audio decoder 712 may be a stereo or mono audio signal.

The super frame analyzer 714 analyzes the super frame (or supplementary signal ES) and obtains a plurality of supplementary signal frames included in the super frame. Herein, the super frame analyzer 714 uses supplementary signal 1 frame number information and supplementary signal frame length information of the supplementary signal frames included in the super frame. The super frame analyzer 714 first figures out how many supplementary signal frames should be obtained from the supplementary signal frame number information and precisely separates supplementary signal frames out of the super frame based on the supplementary signal frame length information.

Meanwhile, the super frame analyzer 714 sets up the composition time of the obtained multiple supplementary signal frames. The composition time of each supplementary signal 1 frame is used for synchronization when the multi-channel audio generator 724 generates multi-channel audio by using a down-mixed audio signal and a supplementary signal.

The super frame analyzer 714 first acquires composition time stamp included in the super frame to set up the composition time stamp of the multiple supplementary signal frames. Then, it sets up the composition time stamp of the super frame as the composition time of a supplementary signal frame that is recovered temporally first among the multiple supplementary signal frames. When the composition time of the first supplementary signal frame is determined, the composition times of the other supplementary signal frames are determined based on a pre-calculated time interval. Since the method of setting sup the composition time has been described by referring to Fig. 6, detailed description on it will not be provided herein.

The video decoder 716 decodes the video ES transmitted from the ST depacketizer 710 into video. The OD decoder 718 decodes the received OD stream into OD, whereas the BIFS decoder 720 decodes the received BIFS stream into BIFS. The IOD decoder 722 decodes the received IOD data into IOD.

The multi-channel audio generator 724 receives the down-mixed audio signal transmitted from the down-mixed audio decoder 712 and the frame-based supplementary signal transmitted from the super frame analyzer 714 and generates multi-channel audio.

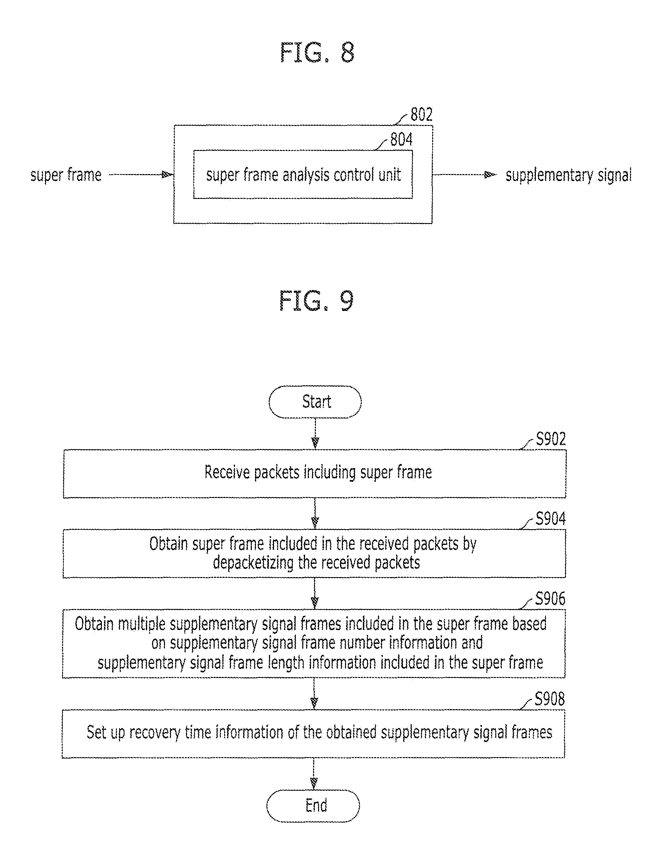

Fig. 8 is a block view of a super frame analyzer shown in Figs. 6 and 7.

Referring to Fig. 8, the super frame analyzer 802 includes a super frame analysis control unit 804. The super frame analysis control unit 804 analyzes a received super frame and generates a plurality of supplementary signal frames. Herein, the super frame analysis control unit 804 obtains the plurality of supplementary signal frames based on supplementary signal frame number information and supplementary signal frame length information of the supplementary signal frames include din the super frame. Since the method of using the supplementary signal frame number information and the supplementary signal frame length information has been described before, detailed description will not be provided herein.

Meanwhile, the super frame analysis control unit 804 sets up the composition times of the obtained supplementary signal frames. The super frame analysis control unit 804 acquires the composition time stamp of the super frame and sets up the acquired composition time stamp as the composition time of a supplementary signal frame that is recovered temporally first among the multiple supplementary signal frames. Subsequently, the composition times of the other supplementary signal frames are determined based on a pre-calculated time interval. Since the method of setting up the composition time of supplementary signal frames has been described before, detailed description on it will not be provided herein.

Fig. 9 is a flowchart describing a method for receiving multi-channel audio signals in accordance with an embodiment of the present invention.

First, in step S902, packets including a super frame are received. In step S904, the received packets are depacketized to thereby acquire the super frame included in the received packets. The acquired super frame includes padding bits for byte alignment or supplementary signal frames. In step S906, a plurality of supplementary signal frames include din the super frame are acquired based on supplementary signal frame number information and supplementary signal frame length information included in the super frame.

In step S908, after the acquisition of the supplementary signal frames, the composition time stamps of the acquired multiple supplementary signal frames are determined. Herein, the composition time stamp of the super frame included in the first received packet is acquired and then the acquired composition time stamp is set up as the composition time of a supplementary signal frame that is recovered temporally first among the multiple supplementary signal frames. Subsequently, the composition times of the other supplementary signal frames are set up based on a pre-calculated time interval.

The method of the present invention described above may be programmed for a computer. Codes and code segments constituting the computer program may be easily inferred by a computer programmer of ordinary skill in the art to which the present invention pertains. The computer program may be stored in a computer-readable recording medium, i.e., data storage, and it may be read and executed by a computer to realize the method of the present invention. The recording medium includes all types of computer-readable recording media, that is, it includes not only tangible media such as CD and DVD, but also intangible media such as carrier wave.

While the present invention has been described with respect to the specific embodiments, it will be apparent to those skilled in the art that various changes and modifications may be made without departing from the spirit and scope of the invention as defined in the following claims.

## Claims

1. An apparatus for transmitting multi-channel audio signals, comprising:
a multi-channel audio down-mixer configured to receive a multi-channel audio signal and transform the multi-channel audio signal into a down-mixed audio signal and a supplementary signal;
a super frame generator configured to generate a super frame including a plurality of supplementary signal frames; and
a packetizer configured to packetize the super frame,
wherein the super frame includes supplementary signal frame number information and supplementary signal frame length information of the supplementary signal frames included in the super frame.

2. The apparatus of claim 1, wherein the packetized super frame obtained in the packetizer further includes a composition time stamp for synchronization with the down-mixed audio signal.

3. The apparatus of claim 2, wherein the composition time stamp is set up with a composition time of a supplementary signal frame that is recovered temporally first among the plurality of supplementary signal frames.

4. The apparatus of claim 1, wherein the super frame further includes padding bits for byte alignment of the supplementary signal frames.

5. An apparatus for receiving multi-channel audio signals, comprising:
a receiver configured to receive packets including a super frame;
a depacketizer configured to depacketize the received packets to thereby acquire the super frame included in the packets; and
a super frame analyzer configured two acquire a plurality of supplementary signal frames included in the super frame based on supplementary signal frame number information and supplementary signal frame length information of the supplementary signal frames included in the super frame.

6. The apparatus of claim 5, wherein the super frame analyzer sets up composition times of the plurality of supplementary signal frames.

7. The apparatus of claim 6, wherein the super frame analyzer acquires a composition time stamp of the super frame included in the received packets, sets up the composition time stamp of the super frame as a composition time of a supplementary signal frame that is recovered temporally first among the plurality of supplementary signal frames, and sets up composition times of the other supplementary signal frames based on a pre-calculated time interval.

8. The apparatus of claim 5, wherein the super frame further includes padding bits for byte alignment of the supplementary signal frames.

9. A method for transmitting multi-channel audio signals, comprising:
receiving a multi-channel audio signal and transforming the multi-channel audio signal into a down-mixed audio signal and a supplementary signal;
generating a super frame including a plurality of supplementary signal frames; and
packetizing the super frame,
wherein the super frame includes supplementary signal frame number information and supplementary signal frame length information of the supplementary signal frames included in the super frame.

10. The method of claim 9, wherein the packetized super frame obtained in said packetizing the super frame further includes a composition time stamp for synchronization with the down-mixed audio signal.

11. The method of claim 10, wherein the composition time stamp is set up with a composition time of a supplementary signal frame that is recovered temporally first among the plurality of supplementary signal frames.

12. The method of claim 9, wherein the super frame further includes padding bits for byte alignment of the supplementary signal frames.

13. A method for receiving multi-channel audio signals, comprising:
receiving packets including a super frame;
depacketizing the received packets to thereby acquire the super frame included in the packets; and
acquiring a plurality of supplementary signal frames included in the super frame based on supplementary signal frame number information and supplementary signal frame length information of the supplementary signal frames included in the super frame.

14. The method of claim 13, further comprising:
setting up composition times of the plurality of supplementary signal frames.

15. The method, of claim 14, wherein said setting up composition times of the plurality of supplementary signal frames includes:
acquiring a composition time stamp of the super frame included in the received packets;
setting up the composition time stamp of the super frame as a composition time of a supplementary signal frame that is recovered temporally first among the plurality of supplementary signal frames; and
setting up composition times of the other supplementary signal frames based on a pre-calculated time interval.

16. The method of claim 13, wherein the super frame further includes padding bits for byte alignment of the supplementary signal frames.
